# EUROPEAN PATENT APPLICATION

(11) **EP 2 003 297 A2**
(43) Date of publication of application: **17.12.2008**
(21) Application number: 07739585.3
(22) Date of filing: 26.03.2007
(51) Int. Cl.: F01N 3/02, B01D 53/56, B01D 53/62, B01D 53/72, B01D 53/74, B01J 19/08, F01N 3/08

(54) **EXHAUST GAS PURIFIER**

(30) Priority: 30.03.2006 JP 2006094339
(71) Applicant: NGK Insulators, Ltd., Nagoya-shi, Aichi 467-8530 (JP); Honda Motor Co., Ltd., Tokyo 107-8556 (JP)
(72) Inventor: SAKUMA, Takeshi, Nagoya-shi, Aichi 467-8530 (JP); KONDOU, Atsuo, Nagoya-shi, Aichi 467-8530 (JP); DOSAKA, Kenji, Wako-shi, Saitama 351-0193 (JP); MIKI, Masanobu, Wako-shi, Saitama 351-0193 (JP)
(74) Representative: Paget, Hugh Charles Edward
(86) International application number: PCT/JP2007/056146
(87) International publication number: WO 2007/116668

(57) **Abstract**

An exhaust gas purifier (100) includes a plasma reactor (10) that includes a plasma generating electrode (1) formed by hierarchically stacking a plurality of unit electrodes (2) at specific intervals, the plasma reactor generating plasma in a space formed between the unit electrodes (2) by applying a pulse voltage between the unit electrodes (2) so that exhaust gas can be treated via a reaction, and a power supply that generates the pulse voltage, each of the unit electrodes (2) including a conductive film (4) and a dielectric (3) disposed on at least one side of the conductive film (4), the unit electrodes (2) being stacked so that the dielectric (3) is positioned on at least one of opposing sides of the unit electrodes (2), the pulse voltage having a pulse width of 1 µm to 1 mm and a field intensity of 5 kV/cm or more, and the amount of energy supplied when applying the pulse voltage being 10 J or less per microgram of a treatment target substance. The exhaust gas purifier can efficiently remove particulate matter via a reaction when introducing a treatment target fluid containing particulate matter into the exhaust gas purifier.

## Description

### TECHNICAL FIELD

The present invention relates to an exhaust gas purifier. More particularly, the present invention relates to an exhaust gas purifier which can efficiently remove particulate matter via a reaction when introducing a treatment target fluid containing particulate matter into the exhaust gas purifier.

### BACKGROUND ART

It is known that a silent discharge occurs when disposing a dielectric between two electrodes and applying a high alternating voltage or a periodic pulse voltage between the electrodes, and active species, radicals, and ions are produced in the resulting plasma field to promote a reaction and decomposition of gases, particulate matter, and the like. It is known that this phenomenon can be utilized to remove toxic components contained in engine exhaust gas or incinerator exhaust gas.

For example, a plasma reactor that allows engine exhaust gas or incinerator exhaust gas to pass through a plasma field to treat NOₓ, carbon particles, HC, CO, and the like contained in the engine exhaust gas or incinerator exhaust gas has been disclosed (e.g., Patent Document 1).

When treating components contained in exhaust gas by utilizing plasma, a large amount of energy is required to treat particulate matter (PM) such as carbon particles as compared with other chemical compounds contained in exhaust gas.

Patent Document 1: JP-A-2001-164925

### DISCLOSURE OF THE INVENTION

Moreover, the PM removal rate is comparatively low although a large amount of energy is required. Specifically, the PM removal performance increases to only a small extent even if the amount of energy supplied to the exhaust gas purifier is increased.

When treating exhaust gas using an exhaust gas purifier that generates plasma between unit electrodes and treats PM via a reaction, PM is normally charged by plasma when exhaust gas is introduced between the unit electrodes. The charged PM moves and adheres to the surface of the electrode due to the force of an electric field generated between the unit electrodes. The PM is thus collected on the surface of the unit electrode. The collected PM is oxidized to be removed from the exhaust gas by oxidizing active species (e.g., ozone) produced by the effect of plasma.

As described above, the PM oxidation treatment process using the exhaust gas purifier that utilizes plasma includes the collection step and the oxidation step. Since the PM removal performance is not improved even if the amount of energy supplied is increased, the rate-limiting step of the PM removal process is considered to be the collection step. For example, when increasing the total area of the unit electrodes of an exhaust gas purifier having a PM removal rate of about 60% in order to improve the collection capability, it is estimated from the following Deutsch Equation that the PM removal rate increases by about 20% by doubling the total area of the unit electrodes, and increases by about 30% by increasing the total area of the unit electrodes by a factor of three.

Deutsch Equation
Collection efficiency (PM removal efficiency)=100×(1-Exp(-G×A/Q))
Q: Gas flow rate
A: Effective (collection) electrode area
G: Separation rate (dust separation rate due to electrode)

Specifically, it is considered that the dust collection capability is improved by increasing the total area of the unit electrodes so that the PM removal rate tends to increase. However, the size of the plasma reactor of the exhaust gas purifier increases to a large extent when increasing the area of the unit electrodes by a factor of two or three. Moreover, it is necessary to use a large power supply.

The present invention was conceived in view of the above-described problems. An object of the present invention is to provide an exhaust gas purifier which can efficiently remove particulate matter via a reaction when introducing a treatment target fluid containing particulate matter into the exhaust gas purifier.

In order to achieve the above object, the present invention provides the following exhaust gas purifier.

[1] An exhaust gas purifier comprising a plasma reactor that includes a plasma generating electrode formed by hierarchically stacking a plurality of unit electrodes at specific intervals, the plasma reactor generating plasma in a space formed between the unit electrodes by applying a pulse voltage between the unit electrodes so that exhaust gas introduced into the space can be treated via a reaction, and a power supply that generates the pulse voltage, each of the unit electrodes including a conductive film and a dielectric disposed on at least one side of the conductive film, the unit electrodes being stacked so that the dielectric is positioned on at least one of opposing sides of the unit electrodes, the pulse voltage having a pulse width of 1 µs to 1 ms and a field intensity of 5 kV/cm or more, and the amount of energy supplied when applying the pulse voltage being 10 J or less per microgram of a treatment target substance.

[2] The exhaust gas purifier according to [1], wherein the pulse voltage has a pulse width of 20 to 50 µs and a field intensity of 10 to 200 kV/cm, and the amount of energy supplied is 0.05 to 10 J or less per microgram of the treatment target substance.

[3] The exhaust gas purifier according to [1] or [2], wherein the distance between the adjacent unit electrodes is 2 mm or less.

[4] The exhaust gas purifier according to any one of [1] to [3], wherein a pulse cycle when applying the pulse voltage is 10 µs to 10 ms.

[5] The exhaust gas purifier according to any one of [1] to [4], wherein a rise time of the pulse voltage is 100 µs or less.

The exhaust gas purifier according to the present invention exhibits an improved PM collection capability since the pulse cycle of the pulse voltage applied to the unit electrodes is as long as 1 µs to 1 ms. Since the field intensity is 5 kV/cm or more, a stable discharge can be achieved. Moreover, charged PM can be effectively moved. Since the amount of energy supplied when applying the pulse voltage is 10 J or less per microgram of the treatment target substance (PM), PM can be oxidized while supplying a minimum amount of energy.

### BRIEF DESCRIPTION OF THE DRAWINGS

FIG. 1A schematically shows a plasma reactor that forms one embodiment of an exhaust gas purifier according to the present invention. FIG. 1A is a cross-sectional view of the plasma reactor along a plane perpendicular to one direction (gas flow direction).
FIG. 1B is a cross-sectional view of the exhaust gas purifier shown in FIG. 1A along the line A-A'.
FIG. 2 is a cross-sectional view schematically showing one embodiment of an exhaust gas purifier according to the present invention.
FIG. 3 shows one pulse of a pulse voltage. FIG. 3 shows a graph that indicates the relationship between time and voltage.
FIG. 4 shows one pulse of a pulse voltage. FIG. 4 shows a graph that indicates the relationship between time and voltage.
FIG. 5 shows one pulse of a pulse voltage applied by exhaust gas purifiers of Examples 1 and 2. FIG. 5 shows a graph that indicates the relationship between time and voltage.

### EXPLANATION OF SYMBOLS

1: plasma generating electrode, 2: unit electrode, 3: dielectric, 4: conductive film, 10: plasma reactor, 11: power supply, 12: conductive line, 21: casing, 22: inlet port, 23: outlet port, 31 and 32: waveform, P: one direction (gas flow direction), Q: another direction, V: space, W: distance between unit electrodes, 100: exhaust gas purifier

### BEST MODE FOR CARRYING OUT THE INVENTION

Embodiments of the present invention are described in detail below with reference to the drawings. Note that the present invention is not limited to the following embodiments. Various modifications, improvements, and the like may be made with regard to the design without departing from the scope of the present invention based on common knowledge of a person skilled in the art. In the drawings, identical elements are indicated by identical symbols.

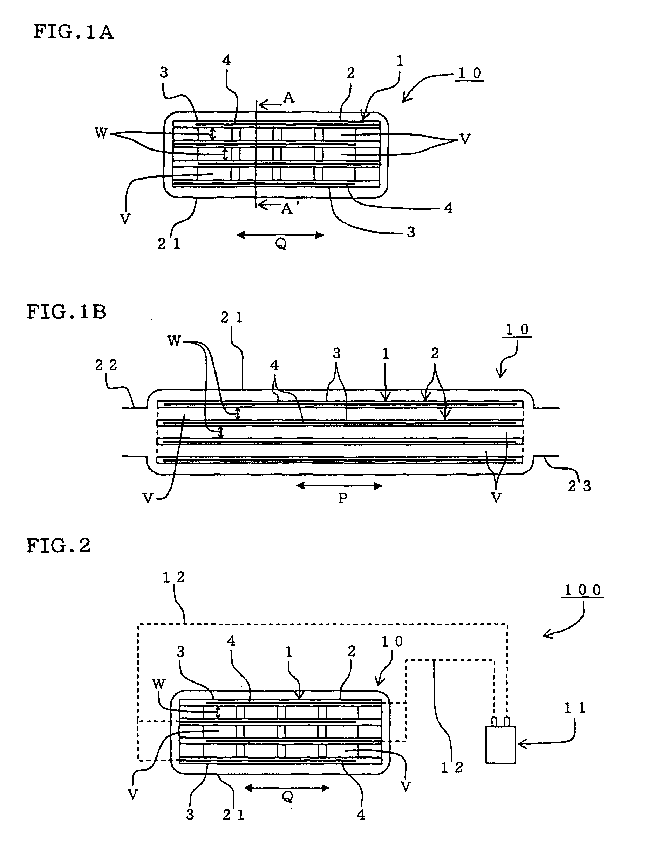

FIG. 1A schematically shows a plasma reactor 10 that forms one embodiment of an exhaust gas purifier according to the present invention. FIG. 1A is a cross-sectional view of the plasma reactor along a plane perpendicular to one direction (gas flow direction). FIG. 1B is a cross-sectional view of the exhaust gas purifier shown in FIG. 1A along the line A-A'. FIG. 2 is a cross-sectional view schematically showing one embodiment of the exhaust gas purifier according to the present invention. FIG. 2 shows an exhaust gas purifier 100 along a plane similar to that of the plasma reactor 10 shown in FIG 1A.

As shown in FIGS. 1A and 1B, the plasma reactor 10 that forms the exhaust gas purifier according to this embodiment includes a plasma generating electrode 1 formed by hierarchically stacking a plurality of unit electrodes 2 at specific intervals, the plasma reactor 10 generating plasma in a space V formed between the unit electrodes 2 by applying a pulse voltage between the unit electrodes 2 so that exhaust gas introduced into the space V can be treated via a reaction. In this embodiment, the plasma reactor 10 includes the plasma generating electrode 1, and a casing 21 that receives the plasma generating electrode 1 in a state in which a PM-containing gas (treatment target fluid) can be introduced into the space V that is three-dimensionally formed between the unit electrodes 2 of the plasma generating electrode 1. The casing 21 includes an inlet port 22 through which the treatment target fluid flows into the plasma reactor 10, and an outlet port 23 through which the treatment target fluid (treated fluid gas) that has passed through the space between the unit electrodes and has been treated is discharged. The unit electrode 2 includes a conductive film 4 and a dielectric 3 disposed on at least one side of the conductive film 4. The unit electrodes 2 are stacked so that the dielectric 3 is positioned on at least one of the opposing sides of the unit electrodes 2. As shown in FIG. 2, the exhaust gas purifier 100 according to this embodiment includes the plasma reactor 10 and a power supply 11 that generates the pulse voltage. The stacked unit electrodes 2 of the plasma generating electrode 1 are alternately connected to a positive electrode and a negative electrode of the power supply 11 through conductive lines 12.

In the exhaust gas purifier 100 according to this embodiment, the pulse voltage applied between the unit electrodes 2 has a pulse width of 1 µs (microsecond) to 1 ms (millisecond) and a field intensity of 5 kV/cm or more, and the amount of energy supplied when applying the pulse voltage is 10 J or less per microgram of the treatment target substance.

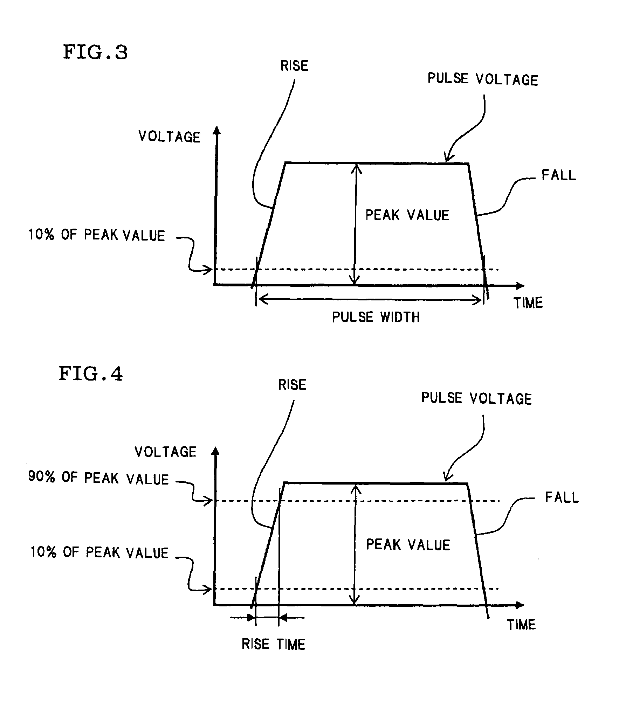

The pulse width of the pulse voltage is 1 µs to 1 ms, and preferably 5 to 50 µs. The term "pulse width" of the pulse voltage used herein refers to a period (pulse width) of a pulse voltage shown in FIG. 3 between a time when the pulse voltage is 10% of the peak value during a rise and a time when the pulse voltage is 10% of the peak value during a fall. FIG 3 shows one pulse of the pulse voltage. FIG. 3 shows a graph that indicates the relationship between time and voltage. The PM collection capability can be improved by thus increasing the pulse width so that the PM removal rate can be improved. Since PM charged by plasma moves due to the force of an electric field generated between the unit electrodes, PM moves toward the unit electrodes and is collected due to the force of an electric field only when the pulse voltage is applied between the unit electrodes so that an electric field is generated. Therefore, an electric field that applies the force to PM is generated for a long period of time by increasing the pulse width of the pulse voltage (i.e., voltage application time per pulse) so that a period of time sufficient for PM to move to the unit electrodes can be provided, whereby the PM collection capability can be improved. This improves the PM removal rate. The expression "PM is charged" used herein means that electrons of plasma, a substance ionized by plasma, and the like adhere to PM so that the PM is charged (ionized).

If the pulse width is less than 1 µs, the PM collection capability cannot be improved. If the pulse width is greater than 1 ms, it is necessary to increase the amount of energy supplied for a PM oxidation reaction.

The field intensity when applying the pulse voltage is 5 kV/cm or more, preferably 10 to 200 kV/cm, and more preferably 20 to 150 kV/cm. A stable plasma discharge can be achieved by setting the field intensity at 5 kV/cm or more. Moreover, a strong force acts on the charged PM due to a high field intensity so that the PM can be effectively moved. If the field intensity is lower than 5 kV/cm, plasma cannot be stably generated. Moreover, a sufficiently strong force cannot be applied to the charged PM.

The amount of energy supplied when applying the pulse voltage is 10 J or less, preferably 0.05 to 10 J, and particularly preferably 0.1 to 2 J per microgram of PM (i.e., treatment target substance). Since the PM removal efficiency is not improved even if the amount of energy supplied is increased to a large extent, it is preferable to reduce the amount of energy supplied within such a range that PM can be oxidized from the viewpoint of a reduction in energy consumption and energy cost. If the amount of energy supplied is larger than 10 J per microgram of the treatment target substance, energy is unnecessarily consumed so that the energy cost increases. It is preferable that the amount of energy supplied be 0.05 J/microgram or more in order to reliably oxidize PM in a PM oxidation step of the PM oxidation treatment process. If the collected PM cannot be sufficiently oxidized, PM may be deposited on the surface of the unit electrode and may serve as a conductor, whereby plasma may not be generated between the unit electrodes.

In the exhaust gas purifier according to this embodiment, it is preferable that the distance W between the adjacent unit electrodes 2 be 3 mm or less, and more preferably 0.1 to 2.0 mm. The field intensity can be easily increased by setting the distance between the unit electrodes 2 at 2 mm or less. Moreover, since the distance from the unit electrode when PM moves due to the force of an electric field decreases, the PM collection capability can be improved. If the distance between the unit electrodes is longer than 2 mm, since PM moves over a long distance due to the force of an electric field, the PM collection capability may decrease. If the distance between the unit electrodes is long, it may be necessary to supply a large amount of power, because the voltage required to obtain a desired field intensity increases and it is necessary to maintain the PM oxidization capability. Note that the distance W between the adjacent unit electrodes 2 refers to the distance between the opposing surfaces of the adjacent unit electrodes 2 in other words the distance between the opposing surfaces of the dielectrics 3 of the unit electrodes 2.

In the exhaust gas purifier according to this embodiment, the pulse cycle when applying the pulse voltage is set at 10 µs to 10 ms. The term "pulse cycle" used herein refers to a period between the rise timing (i.e., 0% of the peak value) of one pulse and the rise timing (i.e., 0% of the peak value) of the next pulse. The term "pulse cycle" used herein refers to a period between the rise timing (i.e., 0% of the peak value) of one pulse and the rise timing (i.e., 0% of the peak value) of the next pulse. Therefore, it is preferable that the pulse cycle be greater than the pulse width so that successive pulses do not overlap.

In the exhaust gas purifier according to this embodiment, it is preferable that the rise time of the pulse voltage be 100 µs or less, and more preferably 5 µs or less. It is preferable that the rise time of the pulse voltage is 100 µs or less, because an oxidizing excited species can be efficiently generated in the plasma generating space so that the PM oxidation performance is improved. If the rise time of the pulse voltage is longer than 100 µs, the collected PM oxidation performance decreases. Therefore, the PM collected on the surface of the electrode cannot be treated and is deposited on the surface of the electrode, whereby a discharge between the electrodes becomes unstable. As a result, the PM removal performance may deteriorate to a large extent. The term "rise time" of the pulse voltage used herein refers to a period of time of a pulse voltage shown in FIG 4 to rise from 10% of the peak value to 90% of the peak value. FIG. 4 shows one pulse of the pulse voltage. FIG. 4 shows a graph that indicates the relationship between time and voltage.

In the plasma generating electrode 1 of the plasma reactor 10 shown in FIGS. 1A and 1B, the space V is formed between the unit electrodes 2 so that each end in one direction (gas flow direction) P is open and each end in another direction Q is closed.

As shown in FIGS. 1A and 1B, the unit electrode 2 of the plasma generating electrode 1 includes the sheet-shaped dielectric 3 and the conductive film 4 disposed inside the dielectric 3. In this embodiment, the dielectric 3 is disposed on each side of each conductive film 4. It suffices that the dielectric 3 be disposed on at least one side of the conductive film 4. It suffices that the unit electrodes 2 be stacked so that the dielectric 3 is positioned on at least one of the opposing sides of the unit electrodes 2. When the dielectric is disposed on the surface of one of a pair of conductive films, a non-uniform discharge such as a spark discharge can be reduced as compared with the case of causing a discharge using only the conductive films 4, whereby a small discharge can be caused to occur at a plurality of locations. Since such a small discharge involves a small amount of current as compared with a spark discharge or the like, power consumption can be reduced. Moreover, a current that flows between the unit electrodes 2 is limited due to the presence of the dielectric so that non-thermal plasma which does not cause an increase in temperature and consumes only a small amount of energy can be generated.

In this embodiment, the thickness of the conductive film 4 of the unit electrode 2 is preferably 0.001 to 0.1 mm, and more preferably 0.005 to 0.05 mm in order to reduce the size of the plasma generating electrode 1 and to reduce the resistance of the treatment target fluid which is caused to pass through the space between the unit electrodes 2 when treating an exhaust gas or the like.

The conductive film 4 used in this embodiment preferably includes a metal exhibiting excellent conductivity as the main component. As suitable examples of the main component of the conductive film 4, at least one metal selected from the group consisting of tungsten, molybdenum, manganese, chromium, titanium, zirconium, nickel, iron, silver, copper, platinum, and palladium can be given. In this embodiment, the term "main component" refers to a component that accounts for 60 mass% or more of components of the conductive film.

It is preferable that the conductive film 4 of the unit electrode 2 be applied to the dielectric 3. As suitable examples of the application method, printing, rolling, spraying, electrostatic painting, dipping, knife coating, and the like can be given. According to these methods, a thin conductive film 4 exhibiting excellent surface smoothness after application can be easily formed. In this case, it is preferable to use a sheet-shaped ceramic body as the dielectric 3.

When applying the conductive film 4 to the dielectric, a powder of a metal mentioned above as the main component of the conductive film 4, an organic binder, and a solvent such as terpineol may be mixed to prepare a conductive paste, and the conductive paste may be applied to the dielectric 3 using the above-mentioned method. When using a sheet-shaped ceramic body as the dielectric 3, an additive may optionally be added to the conductive paste in order to improve the adhesion between the conductive film 4 and the sheet-shaped ceramic body and improve sintering properties.

In this embodiment, it is preferable that the dielectric 3 that forms the unit electrode 2 be a sheet-shaped ceramic body formed using a high-dielectric-constant material as the main component. As the material for the sheet-shaped ceramic body, aluminum oxide, zirconium oxide, silicon oxide, mullite, cordierite, a titanium-barium type oxide, a magnesium-calcium-titanium type oxide, a barium-titanium-zinc type oxide, silicon nitride, aluminum nitride, or the like may be suitably used. It is preferable to form the dielectric 3 using a material appropriately selected from these materials and suitable for generating plasma appropriate for a PM reaction. The plasma generating electrode can be utilized at a high temperature using a material exhibiting excellent thermal impact resistance as the main component of the dielectric.

For example, copper metallization technology may be utilized for a lower-temperature cofired substrate material (lower-temperature cofired ceramic: LTCC) in which a glass component is added to aluminum oxide (Al₂O₃). Use of the copper metallization technology enables formation of an electrode exhibiting a low resistance and a high discharge efficiency, whereby the size of the electrode can be reduced. This enables a design which prevents thermal stress, whereby the strength of the electrode can be improved. When forming the electrode using a high-dielectric-constant material such as barium titanate, a magnesium-calcium-titanium type oxide, or a barium-titanium-zinc type oxide, the size of the electrode can be reduced due to high discharge efficiency. Therefore, structural design which can reduce occurrence of thermal stress due to high thermal expansion can be achieved.

The relative dielectric constant of the dielectric 3 may be appropriately determined corresponding to the plasma to be generated. The relative dielectric constant of the dielectric 3 is preferably 2 to 10.

The thickness of the dielectric 3 is preferably 0.1 to 3 mm, although the thickness of the dielectric 3 is not particularly limited. If the thickness of the dielectric 3 is less than 0.1 mm, a pair of adjacent unit electrodes 2 may not be electrically insulated. If the thickness of the dielectric 3 exceeds 3 mm, the size of the resulting exhaust gas purifier may not be reduced. Moreover, the applied voltage must be increased due to an increase in electrode-to-electrode distance, whereby efficiency may decrease.

When using a sheet-shaped ceramic body as the dielectric 3, it is preferable to fire a ceramic green sheet for a ceramic substrate to produce a sheet-shaped ceramic body. The ceramic green sheet may be obtained by forming a green sheet slurry or paste to a specific thickness using a known method such as a doctor blade method, a calender method, a printing method, or a reverse roll coating method. The resulting ceramic green sheet may be subjected to cutting, shaving, punching, or communication opening formation, or may be used as an integral laminate in which a plurality of green sheets are stacked and bonded by thermocompression bonding or the like.

As the green sheet slurry or paste, a mixture prepared by mixing an appropriate binder, sintering agent, plasticizer, dispersant, organic solvent, and the like into a specific ceramic powder may be suitably used. As suitable examples of the ceramic powder, alumina, mullite, cordierite, zirconia, silica, silicon nitride, aluminum nitride, ceramic glass, glass, and the like can be given. As suitable examples of the sintering agent, silicon oxide, magnesium oxide, calcium oxide, titanium oxide, zirconium oxide, and the like can be given. The sintering agent is preferably added in an amount of 3 to 10 parts by mass based on 100 parts by mass of the ceramic powder. As the plasticizer, dispersant, and organic solvent, those used for a known method may be suitably used.

The porosity of the sheet-shaped ceramic body is preferably 0.1 to 35%, and more preferably 0.1 to 10%. This enables plasma to be efficiently generated between the unit electrodes 2 including the sheet-shaped ceramic body 3 so that energy consumption can be reduced.

The casing 21 of the plasma reactor 10 shown in FIGS. 1A and 1B is not particularly limited insofar as the plasma generating electrode can be placed in the casing 21 and provided in an automobile or the like so that exhaust gas can be purified. As shown in FIGS. 1A and 1B, it is preferable that the casing 21 have the gas inlet port 22 and the gas outlet port 23 and allow the plasma generating electrode 1 to be disposed inside the casing 21, for example. The plasma reactor 10 is preferably formed so that exhaust gas that has entered the plasma reactor 10 through the inlet port 22 flows into the space V of the plasma generating electrode 1, PM is treated while the exhaust gas passes through the space V, and the exhaust gas that has flowed out from the space V flows toward the outside through the outlet port 23 outside. When disposing the plasma generating electrode 1 in the casing 21, it is preferable to provide an insulating cushioning material exhibiting heat resistance between the casing 21 and the plasma generating electrode 1 in order to prevent breakage.

The material for the casing 21 used in this embodiment is not particularly limited. For example, it is preferable to use ferritic stainless steel having excellent conductivity, being lightweight and inexpensive, and showing only a small amount of deformation due to thermal expansion, as the material for the casing 21.

As shown in FIG 2, the exhaust gas purifier 100 according to this embodiment includes the plasma reactor 10 and the power supply 11 that generates a pulse voltage. The stacked unit electrodes 2 of the plasma generating electrode 1 are alternately connected to the positive electrode and the negative electrode of the power supply 11 through the conductive lines 12.

The power supply 11 is not particularly limited insofar as the above-described specific pulse voltage can be generated. As examples of a power supply that generates a pulse voltage by ON/OFF-controlling a high-voltage switch, "HVP-10K" (manufactured by Haiden Laboratory Co., Ltd.) and the like can be given.

The exhaust gas purifier 100 according to this embodiment configured as described above may be installed in an automotive exhaust system, for example. In this case, exhaust gas is caused to pass through a plasma generated in the space V formed between the unit electrodes, whereby PM contained in the exhaust gas can be efficiently oxidized.

A method of producing an exhaust gas purifier according to one embodiment of the present invention is described in detail below.

A plasma generating electrode that forms the exhaust gas purifier is produced. A ceramic green sheet used for the above-described sheet-shaped ceramic body is formed. For example, a sintering agent, a binder such as a butyral resin or a cellulose resin, a plasticizer such as DOP or DBP, an organic solvent such as toluene or butadiene, and the like are added to at least one material selected from the group consisting of alumina, mullite, cordierite, mullite, silicon nitride, aluminum nitride, ceramic glass, and glass. The components are sufficiently mixed using an alumina pot and alumina cobblestone to prepare a slurry for forming a green sheet. The slurry for forming a green sheet may be prepared by mixing these materials by ball milling using a mono ball.

The resulting slurry for forming a green sheet is stirred under reduced pressure to remove bubbles. The viscosity of the slurry for forming a green sheet is then adjusted to a specific value. The slurry for forming a green sheet thus prepared is formed in the shape of a tape using a tape forming method such as a doctor blade method to form a plurality of types of unfired ceramic bodies.

A conductive paste for forming a conductive film disposed on one side of the unfired ceramic body is prepared. The conductive paste may be prepared by adding a binder and a solvent such as terpineol to a silver powder, and sufficiently kneading the mixture using a triple roll mill, for example.

The resulting conductive paste is printed on the surface of one of the unfired ceramic bodies by screen printing or the like to form a conductive film with a specific shape to obtain a conductive film-containing unfired ceramic body. In order to supply electricity to the conductive film from the outside of the unit electrode after forming the unit electrode by holding the conductive film between the ceramic bodies, the conductive paste is preferably printed so that the conductive film reaches the outer edge of the unfired ceramic body.

The conductive film-containing unfired ceramic body and another unfired ceramic body are stacked so that the printed conductive film is covered. It is preferable to stack the unfired ceramic bodies at a temperature of 100°C while applying a pressure of 10 MPa. Then, the unfired ceramic bodies that have been stacked with the conductive film held therebetween are fired to form a unit electrode including the sheet-shaped ceramic body and the conductive film.

The resulting unit electrodes are then stacked. In this case, in order to provide a specific interval between the unit electrodes, a ceramic rod in the shape of a quadrangular prism is formed using a raw material similar to that of the ceramic body, and is placed between the unit electrodes. The thickness of the ceramic rod corresponds to the distance between the unit electrodes. The ceramic rods are placed between the unit electrodes so that the ceramic rods are disposed in parallel to provide gas passages when treating exhaust gas or the like. The ceramic rod need not be in the shape of a quadrangular prism, but may be in the shape of a cylinder, a prism other than a quadrangular prism, or another prism shape. A plurality of protrusions may be formed on one side of the ceramic body, and a space may be formed by disposing the unit electrodes with the protrusions interposed therebetween. Projections and depressions may be formed on the ceramic bodies, and a space may be formed by combining the projections and the depressions. The plasma generating electrode of the exhaust gas purifier according to this embodiment can be obtained by hierarchically stacking the unit electrodes with the ceramic rods interposed therebetween.

The casing 21 of the exhaust gas purifier according to this embodiment may be obtained by forming ferrite-type stainless steel or the like into a tube having the gas inlet port 22 and the gas outlet port 23 (see FIGS. 1A and 1B) on opposite ends, for example. It is preferable to form the casing 21 so that the casing 21 can be divided into two or more sections in order to insert the plasma generating electrode into the casing 21.

The exhaust gas purifier 100 according to this embodiment may be obtained by providing the plasma generating electrode in the casing and connecting a specific power supply to the plasma generating electrode (see FIG. 2).

### EXAMPLES

The present invention is described in detail below by way of examples. Note that the present invention is not limited to the following examples.

### Example 1

A plasma reactor configured as shown in FIG. 1 in which the number of unit electrodes was increased was produced. The exhaust gas purifier was prepared by connecting the plasma reactor to a pulse power supply. Exhaust gas containing PM was treated using the exhaust gas purifier thus obtained, and the PM removal rate was measured.

A plasma generating electrode used in the exhaust gas purifier of this example was produced as follows. A conductive film (thickness: 10 µm) was screen-printed on the inner side of an unfired alumina tape substrate (thickness: 1.0 mm when stacking and firing two substrates) using a tungsten paste to produce a unit electrode. The outer dimensions of the unit electrode were 90 mm×50 mm. The dimensions of the printed conductive film were 84 mm×46 mm. Thirty-eight unit electrodes were produced and stacked to produce a plasma generating electrode. The distance between the unit electrodes was 0.5 mm. The outer circumference of the plasma generating electrode was held using a heat-resistant mat. The plasma generating electrode was placed in a casing made of 430SS to obtain a plasma reactor. A pulse power supply was connected with the plasma reactor to obtain an exhaust gas purifier. As the pulse power supply, a high-voltage pulse power supply of which the pulse width could be increased was used. The 38-stage unit electrodes were alternately connected to the pulse power supply and ground.

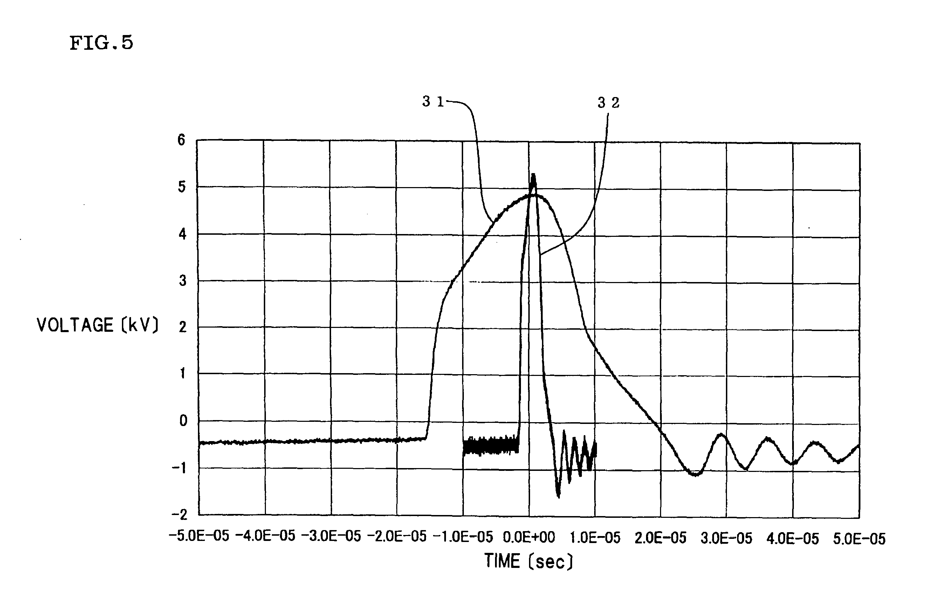

An exhaust gas treatment test was performed using the exhaust gas purifier utilizing exhaust gas (200°C, 1 Nm³/min) containing 21.6 mg/Nm³ of particulate matter (PM) to measure the PM removal rate. As the pulse voltage application conditions, the pulse width was set at 30 µs, the field intensity was set at 31.7 kV/cm, and the amount of energy supplied was set at 1.4 J per microgram of the treatment target substance. The term "PM removal rate (%)" refers to a value obtained by dividing the PM content (g/m³) in the gas discharged from the exhaust gas purifier by the PM content (g/m³) in the gas flowing into the exhaust gas purifier, and multiplying the resulting value by 100. The results are shown in Table 1. FIG. 5 shows the waveform of the applied pulse voltage. FIG. 5 shows one pulse of the pulse voltage of the exhaust gas purifiers of Examples 1 and 2. FIG 5 shows a graph that indicates the relationship between time and voltage. In FIG. 5, the waveform 31 indicates the waveform of the pulse voltage applied in the exhaust gas purifier of Example 1.

**TABLE 1**

| | PM removal rate (%) |
|---|---|
| Example 1 | 75 |
| Example 2 | 55 |
| Comparative Example 1 | 47 |

### Example 2

An exhaust gas purifier was produced in the same manner as in Example 1. The exhaust gas treatment test was performed to measure the PM removal rate in the same manner as in Example 1, except that the pulse width was set at 4.7 µs, the field intensity was set at 35.2 kV/cm, and the amount of energy supplied was set at 1.78 J per microgram of the treatment target substance. The results are shown in Table 1. FIG 5 shows the waveform of the applied pulse voltage. In FIG. 5, the waveform 32 indicates the waveform of the pulse voltage applied in the exhaust gas purifier of Example 2.

### Comparative Example 1

A plasma reactor was produced in the same manner as in Example 1. An exhaust gas purifier was produced using a high-voltage pulse power supply that applied a voltage having a short pulse width as the pulse power supply. The exhaust gas treatment test was performed to measure the PM removal rate using the resulting exhaust gas purifier in the same manner as in Example 1, except that the pulse width was set at 0.9 µs, the field intensity was set at 30 kV/cm, and the amount of energy supplied was set at 2.0 J per microgram of the treatment target substance. The PM removal rate was measured. The results are shown in Table 1.

As shown in Table 1, the exhaust gas purifiers of Examples 1 and 2 exhibited an excellent PM removal rate due to a large pulse width.

### INDUSTRIAL APPLICABILITY

The exhaust gas purifier according to the present invention can be used to remove particulate matter contained in engine exhaust gas or incinerator exhaust gas. In particular, the exhaust gas purifier according to the present invention can be suitably utilized as an exhaust gas purifier which can efficiently remove particulate matter with a low energy loss and a low cost of equipment.

## Claims

1. An exhaust gas purifier comprising:
a plasma reactor that includes a plasma generating electrode formed by hierarchically stacking a plurality of unit electrodes at specific intervals, the plasma reactor generating plasma in a space formed between the unit electrodes by applying a pulse voltage between the unit electrodes so that exhaust gas introduced into the space can be treated via a reaction; and
a power supply that generates the pulse voltage,
each of the unit electrodes including a conductive film and a dielectric disposed on at least one side of the conductive film;
the unit electrodes being stacked so that the dielectric is positioned on at least one of opposing sides of the unit electrodes;
the pulse voltage having a pulse width of 1 µs to 1 ms and a field intensity of 5 kV/cm or more; and
the amount of energy supplied when applying the pulse voltage being 10 J or less per microgram of a treatment target substance.

2. The exhaust gas purifier according to claim 1, wherein the pulse voltage has a pulse width of 20 to 50 µs and a field intensity of 10 to 200 kV/cm, and the amount of energy supplied is 0.05 to 10 J or less per microgram of the treatment target substance.

3. The exhaust gas purifier according to claim 1 or 2, wherein the distance between the adjacent unit electrodes is 2 mm or less.

4. The exhaust gas purifier according to any one of claims 1 to 3, wherein a pulse cycle when applying the pulse voltage is 10 µs to 10 ms.

5. The exhaust gas purifier according to any one of claims 1 to 4, wherein a rise time of the pulse voltage is 100 µs or less.
